# EUROPÄISCHE PATENTSCHRIFT

(11) **EP 0 819 655 B1**
(45) Veröffentlichungstag und Bekanntmachung des Hinweises auf die Patenterteilung: **08.12.1999**
(21) Anmeldenummer: 97111305.5
(22) Anmeldetag: 04.07.1997
(51) Int. Cl.: C03B 23/047

(54) **Verfahren und Vorrichtung zur Herstellung eines zylinderförmigen Bauteils aus Glas**
Process and apparatus for producing a cylindrically-shaped glass article
Procédé et dispositif pour la fabrication d'un corps en verre à forme cylindrique

(30) Priorität: 19.07.1996 DE 19629169
(43) Veröffentlichungstag der Anmeldung: 21.01.1998
(73) Patentinhaber: Heraeus Quarzglas GmbH & Co. KG, 63450 Hanau (DE)
(72) Erfinder: Bräuer, Karsten, 63486 Bruchköbel (DE); Gänsicke, Frank, 63826 Geiselbach (DE); Friedrich, Helmut, 64807 Dieburg (DE); Fabian, Heinz, 63579 Freigericht (DE)
(74) Vertreter: Staudt, Armin Walter

(56) Entgegenhaltungen:
- EP-A- 0 484 035
- DE-A- 19 536 960
- PATENT ABSTRACTS OF JAPAN vol. 9, no. 74 (C-273), 3.April 1985 & JP 59 207849 A (HITACHI CABLE CO. LTD.), 26.November 1984,
- PATENT ABSTRACTS OF JAPAN vol. 10, no. 136 (C-347), 20.Mai 1986 & JP 60 260439 A (HITACHI CABLE CO. LTD.), 23.Dezember 1985,
- PATENT ABSTRACTS OF JAPAN vol. 11, no. 167 (C-425), 28.Mai 1987 & JP 61 295253 A (DAINICHI NIPPON CABLES LTD.), 26.Dezember 1986,

## Beschreibung

Die Erfindung betrifft ein Verfahren zur Herstellung eines zylinderförmigen Bauteils aus Glas, durch Zuführen einer Glasmasse zu einer Erhitzungszone, Erweichen der Glasmasse in der Erhitzungszone, kontinuierliches Verformen der erweichten Glasmasse zu dem Bauteil unter Ausbildung eines Verformungsbereiches, innerhalb dessen die erweichte Glasmasse plastisch verformbar ist, und Ermitteln der Querschnitts-Geometrie des Bauteils.

Weiterhin betrifft die Erfindung eine Vorrichtung zur Durchführung des Verfahrens, mit einer Zuführeinrichtung, einer Heizeinrichtung und einer Abzugseinrichtung, wobei der Heizeinrichtung mittels der Zuführeinrichtung kontinuierlich eine Glasmasse zugeführt, darin erweicht und aus der erweichten Glasmasse mittels der Abzugseinrichtung unter Ausbildung eines Verformungsbereiches das Bauteil geformt wird.

Ein Verfahren und eine Vorrichtung gemäß der angegebenen Gattung sind in der DE-A1 195 36 960 beschrieben. Ein vertikal orientierter, rohrförmiger Ausgangszylinder aus Quarzglas wird mittels einer Zuführeinrichtung kontinuierlich einem Ofen zugeführt und darin von dem unteren Ende beginnend bereichsweise erhitzt und erweicht. Aus dem erweichten Bereich wird unter Verwendung einer Abzugseinrichtung ein Rohr abgezogen, das einen kleineren Außendurchmesser als der Ausgangszylinder aufweist.

Beim Ziehen des Quarzglas-Rohres bildet sich zwischen dem Ausgangszylinder und dem Rohr eine sogenannte Ziehzwiebel aus. Im Bereich der Ziehzwiebel ist das Quarzglas plastisch verformbar. Das untere Ende der Ziehzwiebel weist, bis auf einen geringen, im wesentlichen durch die Wärmedehnung des Quarzglases bedingten Unterschied, die Querschnittsabmessungen des Rohres auf.

Der Außendurchmesser des Rohres wird unterhalb der Ziehzwiebel gemessen. Dieser Meßwert wird zur Regelung von Ziehparametern, wie der Ofentemperatur oder der Ziehgeschwindigkeit, verwendet.

Um Abweichungen von der Rohrgeometrie zu verhindern und die Maßhaltigkeit des abgezogenen Rohres zu gewährleisten, ist es bei dem bekannten Verfahren erforderlich, im Bereich der Ziehzwiebel ein möglichst homogenes, im Idealfall radialsymmetrisch um die Rohr-Längsachse ausgebildetes Temparaturfeld aufrechtzuerhalten. Bei Störungen des homogenen Temperaturfeldes, wie sie beispielsweise durch Meßvorrichtungen im Ofenbereich hervorgerufen werden oder bei Dejustierungen der Rohr-Längsachse in bezug auf die Symmetrieachse des Temperaturfeldes kommt es zwangsläufig zu Abweichungen von der idealen Rohrgeometrie. Insbesondere werden bei im Querschnitt runden Rohren und Stäben in der Praxis ovale Verformungen beobachtet. Diese Abweichungen von der gewünschten Querschnittsgeometrie des Bauteils wirken sich auf nachfolgende Weiterverarbeitungschritte störend aus, so daß derartige Bauteile verworfen oder aufwendig auf das Sollmaß nachbearbeitet werden müssen. Daher wird üblicherweise versucht, durch aufwendige und kostspielige Ofenkonstruktionen im Bereich der Ziehzwiebel ein möglichst radialsymmetrisches, homogenes Temperaturprofil zu gewährleisten.

Der Erfindung liegt daher die Aufgabe zugrunde, ein einfaches und kostengünstiges Verfahren anzugeben, das die Herstellung eines Bauteils mit geringen Abweichungen von der gewünschten Querschnittsgeometrie ermöglicht, und eine hierfür geeignete und flexible Vorrichtung zur Verfügung zu stellen.

Hinsichtlich des Verfahrens wird diese Aufgabe ausgehend von dem eingangs genannten Verfahren erfindungsgemäß dadurch gelöst, daß in Abhängigkeit von einer festgestellten Abweichung der Querschnitts-Geometrie von einer Sollgeometrie des Bauteils, die erweichte Glasmasse in mindestens einem Verformungsabschnitt, der sich nur über einen Teil des Umfangs des Verformungsbereichs erstreckt, lokal erhitzt oder gekühlt wird.

Durch Erhitzung oder Kühlung im Verformungsbereich wird die Viskosität des Glases verändert und dadurch die plastische Verformung der Glasmasse im Verformungsbereich gezielt beeinflußt. Bei dem erfindungsgemäßen Verfahren ist dabei die Änderung der Viskosität und damit auch die Verformung der Glasmasse über den Umfang des Verformungsbereiches gesehen unterschiedlich. Dies wird dadurch erreicht, daß die Erhitzung oder Kühlung in einem Verformungsabschnitt erfolgt, der sich nur über einen Teil des Umfangs des Verformungsbereichs erstreckt.

Unter dem Verformungsbereich wird dabei derjenige Bereich verstanden, in dem die Glasmasse plastisch verformbar ist und in dem durch Kühlung oder Erhitzung die Geometrie des Bauteils beeinflußbar ist. Bei Verfahren, bei denen das Bauteil aus der Glasmasse gezogen wird, ist der Verformungsbereich in Form einer Ziehzwiebel ausgebildet. Bei Verfahren, bei denen das Bauteil durch Stauchen der Glasmasse im Verformungsbereich gebildet wird, kann der Verformungsbereich auch anders geformt sein.

In einem Querschnitt in Richtung der Bauteil-Zylinderachse gesehen, erstreckt sich der mindestens eine Verformungsabschnitt nur über einen Teil des Umfangs des Verformungsbereiches. Beispielsweise entspricht der Verformungsabschnitt bei einem im Querschnitt kreisförmigen Verformungsbereich einem Kreisbogen. Durch die lokale Beeinflussung der Viskosität im Verformungsabschnitt ermöglicht das erfindungsgemäße Verfahren eine werkzeugfreie Korrektur der Querschnittsgeometrie des Bauteils.

Über den Umfang des Verformungsbereiches können auch mehrere Verformungsabschnitte verteilt sein, wobei aber stets durch die Kühlung oder Erhitzung in den Verformungsabschnitten insgesamt, die Viskosität der Glasmasse - über den Umfang des Querschnitts im Verformungsbereich gesehen - unterschiedlich beeinflußt wird. Dabei ist zu beachten, daß selbst eine im Verformungsabschnitt punktuell erzeugte Viskositätsänderung natürlich auch in benachbarten Bereichen des Verformungsbereich wirkt, wenn auch schwächer. Eine exakt definierte oder optisch leicht erkennbare Begrenzung des Verformungsabschnitt oder der Verformungsabschnitte gibt es daher nicht.

Die Abweichung der Querschnitts-Geometrie von der Sollgeometrie des Bauteils kann während des Formens des Bauteils aus der erweichten Glasmasse ermittelt werden. In diesem Fall ist es möglich, die ermittelten Abweichnungen beim weiteren Herstellungsprozeß direkt zu berücksichtigen. Es ist aber auch eine Verfahrensweise möglich, bei der zuerst das Bauteil hergestellt, daran die Abweichung der Querschnitts-Geometrie ermittelt und erst danach durch erneutes Erweichen der Glasmasse des Bauteils die gewünschte Querschnitts-Geometrie unter Anwendung des erfindungsgemäßen Verfahrens eingestellt wird. Eine mechanische Nachbearbeitung des Bauteils ist in keinem Fall erforderlich.

Die Abweichung der Querschnitts-Geometrie von der Sollgeometrie des Bauteils kann durch direktes Vermessen der Bauteil-Geometrie außerhalb des Verformungsbereiches erfolgen, aber auch durch eine Messung einer geeigneten Abmessung im Verformungsbereich, wenn diese Abmessung mit der endgültigen Bauteil-Geometrie korrelierbar ist.

Wesentlich ist, daß bei dem erfindungsgemäßen Verfahren die Anforderungen an die Homogenität des Temperaturprofils in der Erhitzungszone relativ gering sind. Ungewollte Viskositätsänderungen durch Störungen des Temperaturprofils in diesem Bereich können leicht kompensiert werden. Dadurch ist es möglich, unter Inkaufnahme solcher Störungen relativ einfache und kostengünstige Heizeinrichtungen zum Erweichen der Glasmasse einzusetzen, ohne Abstriche an der Maßhaltigkeit des Bauteils hinnehmen zu müssen.

Von der konkreten Form des Bauteil-Querschnitts ist das erfindungsgemäße Verfahren unabhängig. Es ist beispielsweise geeignet zur Herstellung von Rohren, Stäben oder Fasern.

Es wird eine Verfahrensweise bevorzugt, bei der auf die Glasmasse im Verformungsabschnitt eine Gasströmung gerichtet wird. Die Glasmasse wird dadurch im Verformungsabschnitt gekühlt und die Viskosität lokal erhöht. Dadurch wird die Querschnittsform der Glasmasse im Verformungsbereich verändert. Eine auf den Verformungsabschnitt gerichtete Gasströmung läßt sich besonders schnell regeln und relativ einfach einrichten.

Alternativ zu einer Kühlung kann die Glasmasse im Verformungsabschnitt auch lokal erhitzt werden, um eine geeignete Verformung zu erzielen. Bewährt haben sich Verfahrensweisen, bei denen die Glasmasse mittels elektrischer Heizelemente, mittels einer Flamme oder mittels eines Laserstrahls erhitzt wird.

In einer weiteren vorteilhaften Verfahrensvariante wird die Glasmasse im Verformungsabschnitt mittels Hitzeschilden abgeschirmt. Die Hitzeschilde, die einfach zu positionieren sind, wirken im Verformungsabschnitt kühlend, indem sie den Verformungsabschnitt vor der Wärmestrahlung abschirmen, die von heißen Ofenwandungen ausgeht.

Besonders bewährt hat sich eine Verfahrensweise, bei der der Verformungsbereich in zwei sich gegenüberliegenden Verformungsabschnitten lokal erhitzt oder gekühlt wird. Diese Verfahrensweise ist besonders geeignet zur Beseitigung oder Verminderung einer Ovalität bei Bauteilen mit kreis- oder ringförmigem Querschnitt. Dabei verlaufen im Falle einer Kühlung der Verformungsabschnitte diese im Bereich der Verlängerung der kurzen Hauptachse des Ovals, und im Fall einer Erhitzung der Verformungsabschnitte senkrecht dazu.

Vorteilhafterweise wird der Verformungsabschnitt in Abhängigkeit von einer festgestellten zeitlichen Veränderung der Querschnitts-Geometrie des Bauteils über den Umfang des Verformungsbereichs verlagert. Diese Verfahrensweise ist insbesondere dann zu bevorzugen, wenn die Bauteilgeometrie während des Herstellungsprozesses überwacht und korrigiert wird und wenn in dessen Verlauf Änderungen der Bauteil-Geometrie zu erwarten sind.

Besonders bewährt hat es sich, Betrag und Form einer Geometrie-Abweichung von der Sollgeometrie des Bauteils zu ermitteln und zur Regelung der lokalen Erhitzung oder Kühlung im Verformungsabschnitt zu verwenden. Dabei wird der ermittelte Betrag der Abweichung zur Regelung der Stärke der Erhitzung bzw. Kühlung im Verformungsabschnitt, und die ermittelte Form der Abweichung zur Positionierung des Verformungsabschnittes verwendet.

Zur Herstellung eines im Querschnitt kreis- oder ringförmigen Bauteils wird eine Verfahrensweise bevorzugt, bei der der Durchmesser des Bauteils über seinen Umfang gemessen wird und aus dem maximalen und minimalen Meßwert der Betrag und die Lage der Kreis- oder Ringform-Abweichung ermittelt werden, wobei der Betrag zur quantitativen Regelung der Erhitzung oder der Kühlung im Verformungsabschnitt, und die Lage zur Regelung der Positionierung des Verformungsabschnitts verwendet wird. Bei der Messung des Durchmesser über den gesamten Bauteil-Umfang können der maximale und der minimale Durchmesserwert, und daraus die Größe und Lage einer Rundheitsabweichung, insbesondere einer Ovalität, ermittelt werden. Die Größe der Ovalität beeinflußt die Stärke der Kühlung oder Erhitung der Glasmasse im Verformungsabschnitt. Die Lage der Ovalität bestimmt die Lage des Verformungsabschnitts bzw. der Verformungsabschnitte.

Besonders bewährt hat sich eine Verfahrensweise, bei der ein Strang mit einem kreisförmigen Querschnitt aus der erweichten Glasmasse abgezogen wird, wobei sich ein Verformungsbereich in Form einer sich in Ziehrichtung verjüngenden Ziehzwiebel ausbildet.

Hinsichtlich der Vorrichtung wird die oben genannte Aufgabe erfindungsgemäß dadurch gelöst, daß ausgehend von der Vorrichtung gemäß der angegebenen Gattung, Heiz- und/oder Kühlmittel vorgesehen sind, die auf mindestens einen Verformungsabschnitt, der sich nur über einen Teil des Umfangs des Verformungsbereiches erstreckt, lokal einwirken.

Durch die lokale Einwirkung der Heiz- und/oder Kühlmittel wird, wie anhand des erfindungsgemäßen Verfahrens bereits erläutert, die Viskosität der Glasmasse im Verformungsabschnitt lokal beeinflußt. Die Heiz- und/oder Kühlmittel wirken auf den Verformungsabschnitt ein; hierzu können sie auch von diesem beabstandet sein.

In einer bevorzugten Ausführungsform umfassen die Kühlmittel eine Gasdüse. Aus der Gasdüse ausströmender Gasstrom wirkt auf den Verformungsabschnitt ein. Derartige Gasdüsen lassen sich besonders einfach handhaben und installieren.

In weiteren bevorzugten Ausführungsformen der Vorrichtung weisen die Heizmittel alternativ ein elektrisches Heizelement, einen Brenner oder einen Laser auf.

Besonders einfach gestaltet sich eine Vorrichtung, bei der die Kühlmittel ein Hitzeschild umfassen.

Vorteilhafterweise sind die Heiz- und/oder Kühlmittel sich paarweise gegenüberliegend ausgebildet. Eine derartige Vorrichtung ist besonders geeignet zur Beseitigung von Ovalitäten bei einem Bauteil mit einem kreis- oder ringförmigen Querschnitt. Dabei hat es sich besonders bewährt, die Kühlmittel mit zwei sich gegenüberliegenden Gasdüsen auszubilden.

Alternativ weisen die Kühlmittel einen am Umfang des Verformungsbereich angeordneten Düsenkranz auf, bei dem die einzelnen Düsen für unterschiedliche Gasdurchsätze ausgelegt sind. Die Gasdurchsätze durch die einzelnen Düsen sind in Abhängigkeit von der Größe und Lage der festgestellten Abweichung von der Sollgeometrie des Bauteils einstellbar.

Besonders einfach gestaltet sich eine Vorrichtung, bei der die Heiz- oder Kühlmittel innerhalb der Heizeinrichtung angeordnet sind.

Insbesondere im Hinblick auf eine hohe Flexibilität der Vorrichtung hat es sich als vorteilhaft erwiesen, daß die Heiz- und/oder Kühlmittel in Längsachsenrichtung des Bauteils verschiebbar und in Umfangsrichtung um den Verformungsbereich verstellbar ausgebildet sind. Durch die Verschiebbarkeit kann die Position des Verformungsabschnitts in axialer Richtung verändert werden. Dadurch ist es auf einfache Weise möglich, die Stärke der Kühlung bzw. Heizung im Verformungsbereich zu verändern. Die Verstellbarkeit in Umfangsrichtung ermöglicht die Anpassung der Position des Verformungsabschnitt an eine Änderung der Lage oder Form einer Abweichung des Bauteils-Querschnitts von seiner Sollgeometrie. Dabei wird eine Ausführungsform der Vorrichtung bevorzugt, bei der die Heiz- und/oder die Kühlmittel mit einer Regeeinrichtung verbunden sind und ihre Verstellung bzw. Verschiebung in Abhängigkeit von einem Regelsignal der Regeleinrichtung erfolgt.

Ausführungsbeispiele der Erfindung sind in der Zeichnung dargestellt und werden nachfolgend näher erläutert. In der Zeichnung zeigen im einzelnen in schematischer Darstellung
- **Figur 1**: eine Vorrichtung zum Ziehen eines Stabes aus einem Zylinder unter Verwendung von Gasspüllanzen zur lokalen Kühlung im Bereich der Ziehzwiebel,
- **Figur 2**: die Gasspüllanzen bei der Vorrichtung gemäß Figur 1 in einem Querschnitt entlang der Linie I-I ,in einer vergrößerten Darstellung,
- **Figur 3**: eine Vorrichtung zum Ziehen eines Stabes aus einem Zylinder unter Verwendung eines Düsenkranzes zur lokalen Kühlung im Bereich der Ziehzwiebel und
- **Figur 4**: den Düsenkranz bei der Vorrichtung gemäß Figur 2 in einem Querschnitt entlang der Linie II-II, in einer vergrößerten Darstellung.

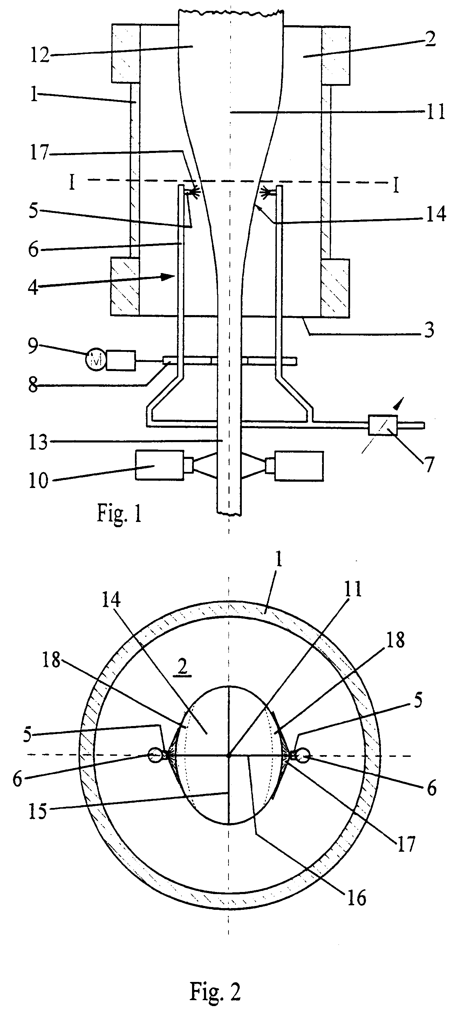

Bei dem in **Figur 1** dargestellten Ausführungsbeispiel der erfindungsgemäßen Vorrichtung ist die Bezugsziffer 1 einem elektrisch beheizten, rohrförmig ausgebildeten und vertikal orientierten Ofen zugeordnet. Der Ofenraum 2 hat einen Innendurchmesser von ca. 25 cm.

Von der unteren Ofenseite 3 erstreckt sich eine Gasspüllanze 4 in den Ofenraum 2. Die Gasspüllanze 4 weist zwei sich im Ofenraum 2 gegenüberliegende Gasdüsen 5 auf, die außerhalb des Ofenraumes 2 über eine Gaszuleitung 6 mit einem regelbaren Strömungsmeßgerät 7 verbunden sind. Die in den Ofenraum 2 hineinragenden Teile, wie die Gasdüsen 5 und die Gaszuleitung 6 bestehen aus einem temperaturbeständigen Werkstoff.

Die Gasspüllanze 4 wird mittels einer Positioniereinrichtung 8 gehalten. Mittels der Positioniereinrichtung 8 ist die Gasspüllanze 4 sowohl in vertikaler Richtung verschiebbar, als auch mit einem Teilkreis von ca. 180 ° um die Mittelachse 11 rotierbar. Die Positioniereinrichtung 8 ist mit einer Regeleinrichtung 9 verbunden.

Im Bereich unterhalb des Ofenraumes 2 ist ein Durchmessermeßgerät 10 vorgesehen, das um einen Teilkreis von ca. 180 ° um die Mittelachse 11 schwenkbar ist.

Nachfolgend wird das erfindungsgemäße Verfahren anhand Figur 1 näher erläutert:

Mittels einer (in der Figur 1 nicht dargestellten Zuführeinrichtung) wird dem Ofen 1 von oben ein in vertikaler Ausrichtung gehaltener Quarzglas-Zylinder 12 kontinuierlich zugeführt. Der Quarzglas-Zylinder 12 weist einen Außendurchmesser von ca. 15 cm auf. Er wird im Ofenraum 2 von dem unteren Ende beginnend kontinuierlich auf eine Temperatur ca. 2200 °C erhitzt. Aus dem erweichten Bereich des Quarzglas-Zylinders 12 wird mittels einer (in der Figur 1 ebenfalls nicht dargestellten) Abzugseinrichtung ein Stab 13 kontinuierlich abgezogen, der einen Außendurchmesser von ca. 3 cm aufweist. Beim Abziehen des Stabes 13 bildet sich zwischen dem Zylinder 12 und dem Stab 13 ein Verformungsbereich aus erweichtem Quarzglas in Form einer Ziehzwiebel 14 aus. Im Bereich der Ziehzwiebel 14 ist die erweichte Quarzglasmasse plastisch verformbar. Die Anordnung der Gasdüsen 5 in vertikaler Richtung wird mittels der Positioniereinrichtung 8 so vorgenommen, daß sie sich im Bereich der Ziehzwiebel 14 gegenüberliegen. Dabei wird ein Abstand der Gasdüsen 5 von der Ziehzwiebel 14 von etwa 10 mm eingestellt.

Die Querschnitts-Geometrie des Stabes 13 wird mittels des Durchmessermeßgerätes 10 ermittelt, wobei dieses den Außendurchmesser des Stabes 13 über dessen Umfang mißt. Aus dem maximalen und dem minimalen Wert für den Außendurchmesser wird der Betrag und die Position einer Rundheitsabweichung oder einer Ovalität des Stabes 13 ermittelt.

In Abhängigkeit von dem Betrag der Rundheitsabweichung wird ein Kühlgasstrom 17 durch die Gasdüsen 5 mittels des Strömungsmeßgerätes 7 eingestellt. Das Strömungsmeßgerät 7 und die Gasdüsen 5 sind für einen Kühlgasstrom 17 zwischen 0 und 20 l/min ausgelegt. Als Kühlgas wird Stickstoff verwendet.

Gleichzeitig wird aufgrund der ermittelten Lage des kleinsten Stab-Außendurchmessers die Positionierung der Gasdüsen 5 am Umfang der Ziehzwiebel 14 mittels der Regeleinrichtung 9 geregelt. Die Regelung beruht darauf, daß die Geometrie der Ziehzwiebel 14 sich auf den Stab 13 abbildet. Beispielsweise werden im Fall einer Ovalität des Stabquerschnitts die Gasdüsen 5 auf die Lage des kleinsten Stab-Außendurchmessers positioniert. Sie liegen sich dann in der Verlängerung der kürzeren Hauptachse des Ovals, projiziert auf den Bereich der Ziehzwiebel 14, gegenüber.

Diese Positionierung der Gasdüsen ist auch aus der Schnittdarstellung gemäß **Figur 2** ersichtlich. Die Ziehzwiebel 14 weist einen ovalen Querschnitt auf. Die lange Hauptachse des Ovals ist mit der Bezugsziffer 15, die kurze Hauptachse mit der Bezugsziffer 16 gekennzeichnet. Die Gasdüsen 5 sind so positioniert, daß der Külgasstrom 17 in erster Linie in Richtung auf die kurze Hauptachse 16 gerichtet wird. Durch den Kühlgasstrom 17 wird die Ziehzwiebel 14 in zwei sich gegenüberliegenden Verformungsabschnitten 18, deren Lage in der Figur 2 durch eine unterschiedliche Schraffur in den Randbereichen des Ovals schematisch angedeutet ist, gekühlt. Somit wird in den Verformungsabschnitten 18 die Viskosität des Quarzglases erhöht, und dadurch die Ovalität der Ziehzwiebel 14 - und damit die Ovalität des Stabes 13 - vermindert oder beseitigt.

Die Stärke des Kühlgasstromes 17 wird mittels des Strömungsmeßgerätes 7 eingestellt. Je stärker der Kühlgasstromes 17 eingestellt wird, umso schneller und stärker erfolgt die gewünschte Verformung im Bereich der Ziehzwiebel 14. Nach der Beseitigung zeitweilig auftretender Störungen während des Ziehens kann der Kühlgasstromes 17 wieder abgestellt werden. Für die Kompensation permanenter Störungen, beispielsweise aufgrund eines inhomogenen Temperaturprofils im Ofenraum 2, wird der Kühlgasstromes 17 kontinuierlich aufrechterhalten.

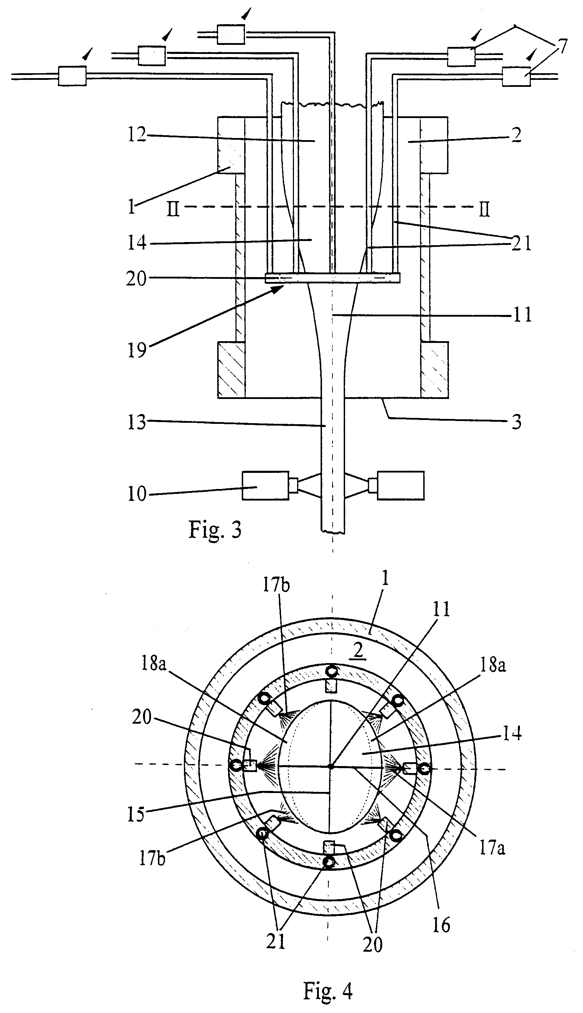

Sofern in den Figuren 3 und 4 identische Bezugszeichen wie in den Figuren 1 und 2 verwendet werden, so sind die damit gekennzeichneten Bauteile oder Bestandteile der erfindungsgemäßen Vorrichtung gleich oder äquivalent zu denjenigen, wie sie anhand der Ausführungsform gemäß den Figuren 1 und 2 für diese Bezugszeichen bereits erläutert worden sind.

Bei der Ausführungsform der erfindungsgemäßen Vorrichtung gemäß **Figur 3** ist anstelle der Gasspüllanze ein Düsenkranz 19 vorgesehen. Der Düsenkranz 19 umschließt die Ziehzwiebel 14 ringförmig in einem Abstand von ca. 15 mm. Am Innenumfang des Düsenkranzes 19 sind insgesamt acht Düsen 20 gleichmäßig verteilt angeordnet. Diese sind auf die Ziehzwiebel 14 gerichtet, wie dies aus der Schnittdarstellung gemäß **Figur 4** ersichtlich ist. Die Düsen 20 des Düsenkranzes 19 sind getrennt voneinander hinsichtlich Gasdurchsatz regelbar. Hierzu ist jede Düse 20 mit einer Gasleitung 21 versehen, die jeweils nach oben aus dem Ofenraum 2 herausgeführt werden. Jede der Gasleitungen 21 ist mit einem regelbaren Gas-Strömungsmeßgerät 7 verbunden. Selbstverständlich wäre es auch möglich, die Gasleitungen 21 nach unten aus dem Ofenraum 2 herauszuführen.

Nachfolgend wird das erfindungsgemäße Verfahren anhand den Figuren 3 und 4 näher erläutert:

Mittels einer (in der Figur 3 nicht dargestellten Zuführeinrichtung) wird dem Ofen 1 von oben ein in vertikaler Ausrichtung gehaltener Quarzglas-Zylinder 12 kontinuierlich zugeführt. Der Quarzglas-Zylinder 12 weist einen Außendurchmesser von ca. 15 cm auf. Er wird im Ofenraum 2 von dem unteren Ende beginnend kontinuierlich auf eine Temperatur ca. 2200 °C erhitzt. Aus dem erweichten Bereich des Quarzglas-Zylinders 12 wird mittels einer (in der Figur 1 ebenfalls nicht dargestellten) Abzugseinrichtung ein Stab 13 kontinuierlich abgezogen, der einen Außendurchmesser von ca 3 cm aufweist. Beim Abziehen des Stabes 13 bildet sich zwischen dem Zylinder 12 und dem Stab 13 ein Verformungsbereich aus erweichtem Quarzglas in Form einer Ziehzwiebel 14 aus. Im Bereich der Ziehzwiebel 14 ist die erweichte Quarzglasmasse plastisch verformbar. Zuführgeschwindigkeit, Abzugsgeschwindigkeit und Ziehtemperatur werden so aufeinander abgestimmt, daß sich die Ziehzwiebel 14 im Bereich des Düsenkranzes 19 ausbildet bzw, der Düsenkranz 19 wird auf etwa den mittleren Bereich der Ziehzwiebel 14 positioniert.

Die Querschnitts-Geometrie des Stabes 13 wird mittels des Durchmessermeßgerätes 10 ermittelt, wobei dieses den Außendurchmesser des Stabes 13 über dessen Umfang mißt. Aus dem maximalen und dem minimalen Wert für den Außendurchmesser wird der Betrag und die Position einer Rundheitsabweichung oder einer Ovalität des Stabes 13 ermittelt.

Der Gasdurchsatz durch die einzelnen Düsen 20 wird in Abhängigkeit vom Betrag der Rundheitsabweichung mittels des Strömungsmeßgerätes 7 geregelt. Die jeweiligen Strömungsmeßgeräte 7 und die Düsen 20 sind für einen Kühlgasstrom 17a, 17b zwischen 0 und 20 l/min ausgelegt. Als Kühlgas wird Helium verwendet.

Gleichzeitig wird aufgrund der ermittelten Lage des kleinsten Stab-Außendurchmessers das Verhältnis der Gasströmungen durch die einzelnen Düsen 20 zueinander bestimmt. Im Fall einer Ovalität des Stabquerschnitts, wie anhand Figur 4 dargestellt, wird der Haupt-Kühlgasstrom 17a auf der Seite des kleinsten Stab-Außendurchmessers erzeugt. Im Bereich der Ziehzwiebel 14 entspricht dies der Verlängerung der kurzen Hauptachse 16 des Ziehzwiebel-Ovals. Liegt die kurze Hauptachse 16 zwischen zwei benachbarten Düsen 20, so wird der Kühlgasstrom zwischen diesen Düsen 20 entsprechend dem Verhältnis ihres Abstandes zur kurzen Hauptachse 16 aufgeteilt.

Beispielsweise weist die Ziehzwiebel 14 einen ovalen Querschnitt auf, wie er aus der Schnittdarstellung gemäß Figur 4 ersichtlich ist. Der Haupt-Kühlgasstrom 17a ist dann in Richtung auf die kurze Hauptachse 16 gerichtet. Im Ausführungsbeispiel liegen sich die den Haupt-Kühlgasstrom 17a erzeugenden Düsen 20 beiderseits des Ovals in der Verlängerung der kurzen Hauptachse 16 gegenüber. Mittels der dazu benachbarten Düsen 20 wird jeweils ein schwächerer Neben-Kühlgasstrom 17b auf die Ziehzwiebel gerichtet, während durch die in der Verlängerung der langen Hauptachse 15 angeordneten Düsen 20 überhaupt kein Kühlgasstrom auf die Ziehzwiebel 14 geleitet wird.

Durch den Kühlgasstrom 17a, 17b wird die Ziehzwiebel 14 in zwei sich gegenüberliegenden Verformungsabschnitten 18a, deren Lage in der Figur 2 durch eine unterschiedliche Schraffur in den Randbereichen des Ovals schematisch angedeutet ist, gekühlt. Durch die Kühlung wird die anhand Figur 1 und 2 näher erläuterte Formänderung bewirkt; das bedeutet, die Ovalität des Stabes 13 wird werkzeugfrei beseitigt.

## Patentansprüche

1. Verfahren zur Herstellung eines zylinderförmigen Bauteils aus Glas, durch Zuführen einer Glasmasse zu einer Erhitzungszone, Erweichen der Glasmasse in der Erhitzungszone, kontinuierliches Verformen der erweichten Glasmasse zu dem Bauteil unter Ausbildung eines Verformungsbereiches, innerhalb dessen die erweichte Glasmasse plastisch verformbar ist, und Ermitteln der Querschnitts-Geometrie des Bauteils, dadurch gekennzeichnet, daß in Abhängigkeit von einer festgestellten Abweichung der Querschnitts-Geometrie von einer Sollgeometrie des Bauteils (12), die erweichte Glasmasse in mindestens einem Verformungsabschnitt (18; 18a), der sich nur über einen Teil des Umfangs des Verformungsbereichs (14) erstreckt, lokal erhitzt oder gekühlt wird.

2. Verfahren nach Anspruch 1, dadurch gekennzeichnet, daß auf die Glasmasse im Verformungsabschnitt (18; 18a) eine Gasströmung (17; 17a; 17b) gerichtet wird.

3. Verfahren nach Anspruch 1, dadurch gekennzeichnet, daß die Glasmasse im Verformungsabschnitt (18; 18a) mittels elektrischer Heizelemente, mittels einer Flamme oder mittels eines Laserstrahls erhitzt wird.

4. Verfahren nach Anspruch 1, dadurch gekennzeichnet, daß die Glasmasse im Verformungsabschnitt (18; 18a) mittels Hitzeschilden abschirmt wird.

5. Verfahren nach einem der vorhergehenden Ansprüche, dadurch gekennzeichnet, daß der Verformungsbereich (14) in zwei sich gegenüberliegenden Verformungsabschnitten (18; 18a) lokal erhitzt oder gekühlt wird.

6. Verfahren nach einem der vorhergehenden Ansprüche, dadurch gekennzeichnet, daß der Verformungsabschnitt (18; 18a) in Abhängigkeit von einer festgestellten zeitlichen Veränderung der Querschnitts-Geometrie des Bauteils (12) über den Umfang des Verformungsbereichs (14) verlagert wird.

7. Verfahren nach einem der vorhergehenden Ansprüche, dadurch gekennzeichnet, daß Betrag und Lage einer Geometrie-Abweichung von der Sollgeometrie ermittelt und zur Regelung der lokalen Erhitzung oder Kühlung im Verformungsabschnitt (18; 18a) verwendet werden.

8. Verfahren nach einem der vorhergehenden Ansprüche, dadurch gekennzeichnet, daß bei einem im Querschnitt kreis- oder ringförmigen Bauteil (12), dessen Durchmesser über seinen Umfang gemessen wird und aus dem maximalen und minimalen Meßwert der Betrag und die Lage der Kreis- oder Ringform-Abweichung ermittelt wird, wobei der Betrag zur quantitativen Regelung der Erhitzung oder der Kühlung im Verformungsabschnitt (18; 18a), und die Lage zur Regelung der Positionierung des Verformungsabschnitts (18; 18a) verwendet wird.

9. Verfahren nach einem der vorhergehenden Ansprüche, dadurch gekennzeichnet, daß ein Strang (13) mit einem kreisförmigen Querschnitt aus der erweichten Glasmasse abgezogen wird, wobei sich ein Verformungsbereich in Form einer sich in Ziehrichtung verjüngenden Ziehzwiebel (14) ausbildet.

10. Vorrichtung zur Durchführung des Verfahrens nach einem der vorhergehenden Ansprüche, mit einer Zuführeinrichtung, einer Heizeinrichtung und einer Abzugseinrichtung, wobei der Heizeinrichtung mittels der Zuführeinrichtung kontinuierlich eine Glasmasse zugeführt, darin erweicht und aus der erweichten Glasmasse mittels der Abzugseinrichtung unter Ausbildung eines Verformungsbereiches das Bauteil geformt wird, dadurch gekennzeichnet, daß Heiz- und/oder Kühlmittel (4; 19) vorgesehen sind, die auf mindestens einen Verformungsabschnitt (18; 18a), der sich nur über einen Teilumfang des Verformungsbereiches (14) erstreckt, lokal einwirken.

11. Vorrichtung nach Anspruch 10, dadurch gekennzeichnet, daß die Kühlmittel (4; 19) eine Gasdüse (5; 20) umfassen.

12. Vorrichtung nach Anspruch 10, dadurch gekennzeichnet, daß die Heizmittel ein elektrisches Heizelement, einen Brenner oder einen Laser umfassen.

13. Vorrichtung nach Anspruch 10, dadurch gekennzeichnet, daß die Kühlmittel ein Hitzeschild umfassen.

14. Vorrichtung nach einem der Ansprüche 10 bis 13, dadurch gekennzeichnet, daß die Heiz- und/oder Kühlmittel sich paarweise gegenüberliegend ausgebildet sind.

15. Vorrichtung nach Anspruch 14 und einem der Ansprüche 10 oder 1, dadurch gekennzeichnet, daß die Kühlmittel (4; 19) zwei sich gegenüberliegende Gasdüsen (5; 20) aufweisen.

16. Vorrichtung nach Anspruch 10, 11 oder 15, dadurch gekennzeichnet, daß die Kühlmittel einen am Umfang des Verformungsbereich (14) angeordneten Düsenkranz (19) aufweisen, bei dem die einzelnen Düsen (20) für unterschiedliche Gasdurchsätze ausgelegt sind

17. Vorrichtung nach einem der Ansprüche 10 bis 16, dadurch gekennzeichnet, daß die Heiz- und/oder Kühlmittel (4; 19) innerhalb der Heizeinrichtung (1) angeordnet sind.

18. Vorrichtung nach einem der Ansprüche 10 bis 17, dadurch gekennzeichnet, daß die Heiz- und/oder Kühlmittel (4; 19) in Längsachsenrichtung des Bauteils (12) verschiebbar und in Umfangsrichtung um den Verformungsbereich (14) verstellbar ausgebildet sind.

19. Vorrichtung nach Anspruch 18, dadurch gekennzeichnet, daß die Heiz-und/oder Kühlmittel (4; 19) mit einer Regeleinrichtung (9) verbunden und in Abhängigkeit von einem Regelsignal der Regeleinrichtung (9) in Längsachsenrichtung des Bauteils (12) verschiebbar und in Umfangsrichtung um den Verformungsbereich (14) verstellbar ausgebildet sind.

## Claims

1. A method for the production of a cylindrical glass member, by feeding a glass mass to a heating zone, softening the glass mass in the heating zone, continuous deformation of the softened glass mass Into the member with the formation of a deformation region, within which the softened glass mass is plastically deformable, and determining the cross-sectional geometry of the member, characterised in that as a function of a determined deviation of the cross-sectional geometry from a nominal geometry of the member (12), the softened glass mass is locally heated or cooled in at least one deformation section (18; 18a) which extends only over a portion of the periphery of the deformation region (14).

2. The method according to Claim 1, characterised in that a gas stream (17; 17a; 17b) is directed onto the glass mass in the deformation section (18; 18a).

3. The method according to Claim 1, characterised in that the glass mass is heated in the deformation section (18; 18a) by means of electric heating elements, by means of a flame or by means of a laser beam.

4. The method according to Claim 1, characterised in that the glass mass is screened by means of heat shields in the deformation section (18; 18a).

5. The method according to any one of the preceding claims, characterised in that the deformation region (14) is locally heated or cooled in two deformation sections (18; 18a) lying opposite each other.

6. The method according to any one of the preceding claims, characterised in that the deformation section (18; 18a) is displaced over the periphery of the deformation region (14) as a function of a determined chronological alteration to the cross-sectional geometry of the member (12).

7. The method according to any one of the preceding claims, characterised in that the amount and position of a geometry deviation from the nominal geometry are determined and used to regulate the local heating or cooling in the deformation section (18; 18a).

8. The method according to any one of the preceding claims, characterised in that with a member (12) of circular or ring-shaped cross-section, its diameter is measured over its periphery and from the maximum and minimum measured value the amount and the position of the circular- or ring-shape deformation is determined, the amount being used for the quantitative regulation of the heating or cooling in the deformation section (18; 18a), and the position being used to regulate the positioning of the deformation section (18; 18a).

9. The method according to any one of the preceding claims, characterised in that a strand (13) with a circular cross-section is withdrawn from the softened glass mass, a deformation region forming in the form of a drawing bulb (14) narrowing in the drawing direction.

10. Apparatus to carry out the method according to any one of the preceding claims, with a supply device, a heating device and a withdrawal device, a glass mass being supplied continuously to the heating device by means of the supply device, softening therein and the member being formed from the softened glass mass by means of the withdrawal device with the formation of a deformation region, characterised in that heating- and/or cooling means (4; 19) are provided, which act locally on at least one deformation section (18; 18a) which extends only over a partial periphery of the deformation region (14).

11. Apparatus according to Claim 10, characterised in that the cooling means (4; 19) comprise a gas nozzle (5; 20).

12. Apparatus according to Claim 10, characterised in that the heating means comprise an electric heating element, a burner or a laser.

13. Apparatus according to Claim 10, characterised in that the cooling means comprise a heat shield.

14. Apparatus according to any one of Claims 10 to 13, characterised in that the heating- and/or cooling means are constructed lying opposite each other in pairs.

15. Apparatus according to Claim 14 and one of Claims 10 or 1, characterised in that the cooling means (4; 19) have two gas nozzles (5; 20) lying opposite each other.

16. Apparatus according to Claim 10, 11 or 15, characterised in that the cooling means have a nozzle ring (19) arranged on the periphery of the deformation region (14), in which the individual nozzles (20) are designed for different gas throughputs.

17. Apparatus according to any one of Claims 10 to 16, characterised in that the heating- and/or cooling-means (4; 19) are arranged inside the heating device (1).

18. Apparatus according to any one of Claims 10 to 17, characterised in that the heating- and/or cooling means (4; 19) are constructed so as to be displaceable in longitudinal axial direction of the member (12) and so as to be adjustable in peripheral direction about the deformation region (14).

19. Apparatus according to Claim 18, characterised in that the heating and/or cooling means (4; 19) are connected with a regulating device (9) and are constructed so as to be displaceable in longitudinal axial direction of the member (12) as a function of a regulating signal of the regulating device (9) and so as to be adjustable in peripheral direction about the deformation region (14).

## Revendications

1. Procédé de fabrication d'un composant de forme cylindrique en verre par amenée d'une masse de verre à une zone de chauffe, par ramollissement de la masse de verre dans la zone de chauffe, par déformation continue de la masse de verre pour obtenir un composant en formant un secteur de déformation à l'intérieur duquel la masse de verre ramollie est plastiquement déformable et par détermination de la géométrie de section transversale du composant, caractérisé en ce qu'en fonction d'une différence constatée entre la géométrie de coupe transversale et la géométrie de consigne du composant (12) ; la masse de verre ramollie est chauffée ou refroidie localement dans au moins une section de déformation (18 ; 18a) qui s'étend uniquement sur une partie de la périphérie du secteur de déformation (14).

2. Procédé selon la revendication 1, caractérisé en ce qu'un courant de gaz (17 ; 17a ; 17 ;) est dirigé sur la masse de verre dans la section de déformation (18 ; 18a).

3. Procédé selon la revendication 1, caractérisé en ce que la masse de verre est chauffée dans la section de déformation (18 ; 18a) au moyen d'un élément chauffant électrique, d'une flamme ou d'un rayon laser.

4. Procédé selon la revendication 1, caractérisé en ce que la masse de verre est protégée dans la section de déformation (18 ; 18a) par des boucliers anti-chaleur.

5. Procédé selon l'une des revendications précédentes, caractérisé en ce que le secteur de déformation (14) est chauffé ou refroidi localement en deux sections opposées de déformation 18 ; 18a).

6. Procédé selon l'une des revendications précédentes, caractérisé en ce que la section de déformation (18 ; 18a) est déplacée en fonction d'une modification temporelle détectée de la géométrie de coupe transversale du composant (12) sur la périphérie du secteur de déformation (14).

7. Procédé selon l'une des revendications précédentes, caractérisé en ce que le montant et la position d'une différence de géométrie par rapport à la géométrie de consigne sont déterminés et sont utilisés pour la régulation du chauffage ou du refroidissement local dans la section de déformation (18 ; 18a).

8. Procédé selon l'une des revendications précédentes, caractérisé en ce que pour un composant (12) de coupe transversale annulaire ou circulaire dont le diamètre est mesuré sur sa périphérie et dont la valeur de mesure maximale et minimale déterminent le montant et la position de la divergence de la forme annulaire ou circulaire, le montant étant utilisé pour la régulation quantitative du chauffage ou du refroidissement dans la section de déformation (18 ; 18a) et la position pour la régulation du positionnement de la section de déformation (18 ; 18a).

9. Procédé selon l'une des revendications précédentes, caractérisé en ce qu'un cylindre (13) de section transversale circulaire est étiré à partir de la masse de verre ramollie, un secteur de déformation se constituant sous forme d'un bulbe d'étirage (14) dont la partie rétrécie est dirigée dans le sens d'étirage.

10. Dispositif pour la mise en oeuvre du dispositif selon l'une des revendications précédentes, comprenant un dispositif d'amenée, un dispositif de chauffage et un dispositif d'étirage, le dispositif d'étirage amenant au dispositif de chauffage une masse de verre en continue qui ramollit dans ce dernier pour obtenir à partir de la masse de verre ramollie au moyen du dispositif d'étirage le composant en formant un secteur de déformation, caractérisé en ce qu'il est prévu des moyens de chauffage et/ou de refroidissement (4 ; 19) qui agissent localement sur au moins une section de déformation (18 ; 18a) qui s'étend seulement sur une partie de la périphérie du secteur de déformation (14).

11. Dispositif selon la revendication 10, caractérisé en ce que les moyens réfrigérants (4 ; 19) comprennent une buse de gaz (5 ; 20).

12. Dispositif selon la revendication 10, caractérisé en ce que les moyens de chauffage comprennent un élément chauffant électrique, un brûleur ou un laser.

13. Dispositif selon la revendication 10, caractérisé en ce que les moyens de refroidissement comprennent un bouclier antichaleur.

14. Dispositif selon l'une des revendications 10 à 13, caractérisé en ce que les moyens de chauffage et de refroidissement sont agencés par paire en se faisant face.

15. Dispositif selon la revendication 14 et l'une des revendications 10 ou 1, caractérisé en ce que les moyens de refroidissement (4 ; 19) présentent deux buses de gaz (5 ; 20) opposées.

16. Dispositif selon la revendication 10, 11 ou 15, caractérisé en ce que les moyens de refroidissement présentent une couronne de buses (19) disposée sur la périphérie du secteur de déformation (14), chacune des buses (20) étant conçue pour différents débits de gaz.

17. Dispositif selon l'une des revendications 10 à 16, caractérisé en ce que les moyens de chauffage et/ou de refroidissement (4 ; 19) sont disposés à l'intérieur du dispositif de chauffage (1).

18. Dispositif selon l'une des revendications 10 à 17, caractérisé en ce que les moyens de chauffage et/ou de refroidissement (4 ; 19) sont coulissants dans le sens longitudinal axial du composant (12) et mobiles dans le sens périphérique autour du secteur de déformation (14).

19. Dispositif selon la revendication 18, caractérisé en ce que les moyens de chauffage et/ou de refroidissement (4 ; 19) sont reliés à un dispositif de réglage (9) et coulissants en fonction d'un signal de réglage du dispositif de réglage (9) dans le sens longitudinal axial du composant 12 et sont mobiles dans le sens périphérique autour du secteur de déformation (14).
